# EUROPÄISCHE PATENTSCHRIFT

(11) **EP 0 288 834 B1**
(45) Veröffentlichungstag und Bekanntmachung des Hinweises auf die Patenterteilung: **03.02.1993**
(21) Anmeldenummer: 88105997.6
(22) Anmeldetag: 14.04.1988
(51) Int. Cl.: H02B 13/02

(54) **Gehäuse einer elektrischen Schaltanlage**
Cabinet for an electrical switch gear
Boîtier pour un appareil de commutation

(30) Priorität: 27.04.1987 DE 8706058 U
(43) Veröffentlichungstag der Anmeldung: 02.11.1988
(73) Patentinhaber: SIEMENS AKTIENGESELLSCHAFT, 80333 München (DE)
(72) Erfinder: Müller, Hans-Joachim, Dipl.-Ing., D-6365 Rosbach 1 (DE); Müller, Rolf, Dipl.-Ing., D-8753 Obernburg (DE); Lotz, Herbert, Dipl.-Ing., D-6074 Rödermark (DE); Tischer, Erich, D-8520 Erlangen (DE)

(56) Entgegenhaltungen:
- AT-B- 378 631
- DE-A- 2 330 163
- DE-A- 2 951 829
- DE-U- 7 217 567

## Beschreibung

Die Erfindung betrifft ein Gehäuse einer elektrischen Schaltanlage, mit einer Kopfwand, die am gesamten Umfang mit angrenzenden Gehäuseteilen verbunden ist, mit mindestens einem, zur Bildung einer Druckentlastungsöffnung um eine Biegelinie aus der Ebene der Kopfwand ausbiegbaren Feld, das ausgehend von der Biegelinie von einer Trennlinie begrenzt ist die aus von schnittfreien Abschnitten unterbrochenen die Kopfwand durchtrennenden Einschnitten besteht, wobei die Trennlinie rings um das ausbiegbare Feld (3) verlaufend angeordnet ist.

Ein Gehäuse mit den vorstehend angegebenen Merkmalen ist durch die DE-A-29 51 829 bekannt geworden. Die Biegelinie befindet sich dabei zwischen den Enden der Trennlinie, die entweder auf der ganzen Länge durch schnittfreie Stellen unterbrochen ist oder auf ganzer Länge als Materialschwächung ausgebildet ist. Beide Gestaltungen führen bei der Beaufschlagung des ausbiegbaren Feldes mit einem inneren Überdruck zu einem Aufreißen der Sollbruchstellen und einer Biegung, die von der Höhe des Druckes abhängt.

An eine solche Anordnung wird jedoch nicht nur die Forderung gestellt, daß im Störungsfall eine sichere Druckentlastung gewährleistet ist, sondern daß im normalen Betrieb der Schutz der Schaltanlage gegen Staub, Wasser und Verschmutzung möglichst unverändert aufrechterhalten bleibt. Zwischenräume im Bereich der ausbiegbaren Felder, durch die Staub eindringen kann, sind daher unerwünscht. Ferner soll ein bestimmter Ansprechdruck eingehalten werden, um das Öffnen der ausbiegbaren Felder unter dem Einfluß normaler Schaltlichtbögen zu vermeiden, ein sicheres Öffnen bei gefahrbringendem Überdruck aber unbedingt sicherzustellen.

Hiervon ausgehend liegt der Erfindung die Aufgabe zugrunde, unter Aufrechterhaltung des Schutzes gegen Staub, Schmutz und Wasser die Druckentlastung mittels der bekannten ausbiegbaren Felder durch das Einhalten bestimmter Ansprechwerte zu verbessern und diese Eigenschaft bei möglichst einfacher Herstellung zu erreichen.

Gemäß der Erfindung wird diese Aufgabe dadurch gelöst, daß die Biegelinie und der mit den als Sollbruchstellen wirkenden schnittfreien Stellen versehene Teil der Trennlinie parallel zueinander angeordnet sind, daß die Biegelinie biegefähige schnittfreie Stellen und die Kopfwand durchtrennende Einschnitte aufweist, daß die übrigem Teile der Trennlinie keine schnittfreien Stellen aufweisen und daß der Rand des ausbiegbaren Feldes entlang der Einschnitte um die Dicke der Kopfwand aus der Ebene der Kopfwand ausgestellt ist.

Sowohl die Festlegung der Biegelinie als auch die Fixierung an der der Biegelinie gegenüberliegenden Seite erfolgt somit durch Einschnitte. Durch das Ausstellen der Ränder der ausbiegbaren Felder um die Dicke der Kopfwand wird die gewünschte Trennung des Materials erzielt. Die erwähnte Ausstellung der Ränder der ausbiegbaren Felder um die Dicke der Kopfwand bewirkt, daß kein nennenswerter Spalt besteht und somit Staub in die Schaltanlage praktisch nicht eintreten kann.

Bei prinzipiell gleicher Herstellungsweise kann die Funktion der Biegelinie und der Sollbruchstellen dadurch erreicht werden, daß in der Biegelinie drei schnittfreie Stellen und in dem zur Biegelinie parallelen Abschnitt der Trennlinie zwei schnittfreie Stellen vorgesehen sind. Ferner kann die Summe der Längen der schnittfreien Stellen in der Biegelinie etwa fünfmal größer als die Summe der Längen der schnittfreien Stellen in dem zur Biegelinie parallelen Abschnitt der Trennlinie bemessen sein.

Ein Ausführungsbeispiel der Erfindung ist in der Zeichnung rein schematisch dargestellt:
Figur 1 eine perspektivische Ansicht.
Figur 2 einen Schnitt nach Linie II-II in Figur 1.
Figur 3 einen Schnitt nach Linie III-III in Figur 1.

In der Zeichnung ist mit 1 ein Gehäuse einer elektrischen Schaltanlage bezeichnet. Das Bezugszeichen 2 gilt für eine Kopfwand des Gehäuses 1.

Die Kopfwand 2 weist im vorliegenden Beispiel zwei Felder 3 auf, die um eine Biegelinie 4, zur Bildung einer Druckentlastungsöffnung, ausbiegbar sind, wie an einem Feld 3 strichpunktiert angedeutet.

Die Kopfwand 2 ist an ihrem gesamten Umfang mit darunter angeordneten Gehäuseteilen verbunden. Die Verbindung ist im vorliegenden Beispiel entlang eines umlaufenden Randes 2a der Kopfwand 2 vorgenommen. Die im dargestellten Rand 2a eingezeichneten Punkte deuten die Verbindungsstellen an.

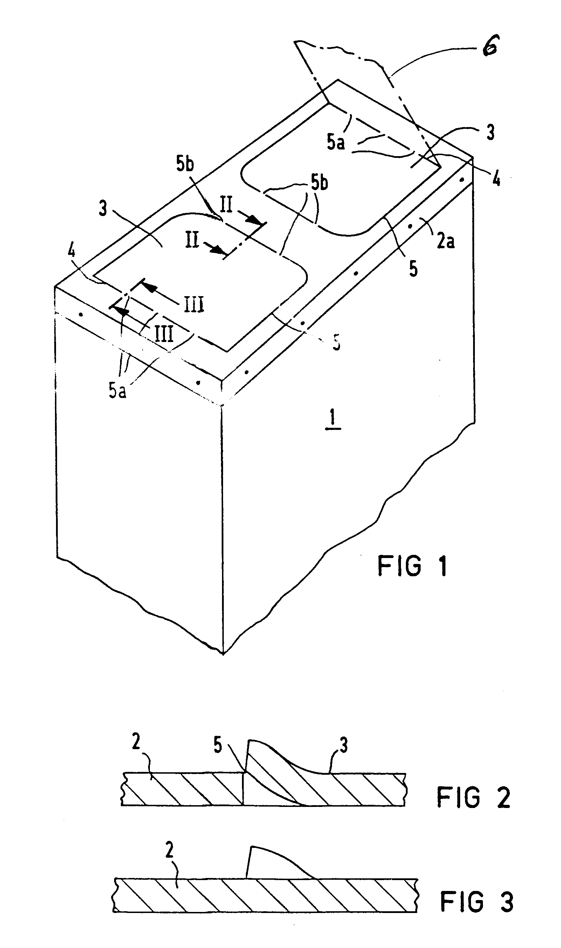

Die Felder 3 sind durch in die Kopfwand 2 eingebrachte Trennlinien 6 eingegrenzt. Eine mögliche Form der im Zuge der Trennlinie 6 eingebrachten Einschnitte (5) ist in Figur 2 im Schnitt dargestellt. Wie aus Figur 2 ersichtlich, ist der Rand des Feldes 3 entlang der Einschnitte (5) um die Dicke der Kopfwand 2 aus der Kopfwandebene, ausgestellt.

Die Trennlinie 6 verläuft ausgehend von der Biegelinie rings um jedes Feld 3 und beinhaltet nur einige schnittfreie Stellen 5b.

Im dargestellten Beispiel sind in jeder Biegelinie 4 drei schnittfreie Stellen 5a vorgesehen. In den zu jeder Biegelinie 4 parallel gelegenen Teil der Trennlinie 6 sind dagegen jeweils zwei schnittfreie Stellen 5b angeordnet.

Die in den Biegelinien 4 angeordneten schnittfreien Stellen 5a sind biegefähig ausgebildet. Dagegen sind die in den zu jeder Biegelinie 4 parallel gelegenen Teil der Trennlinie 6 vorgesehenen schnittfreien Stellen 5b als Sollbruchstellen ausgebildet.

Die Summe der Längen der schnittfreien Stellen 5a in jeder Biegelinie 4 ist zweckmäßig etwa fünfmal größer als die Summe der Längen der schnittfreien Stellen 5b in den zur zugeordneten Biegelinie 4 parallelen Teil der Trennlinie 6. Letzteres gilt unter der Voraussetzung, daß die Dicke der Kopfwand 2 zwei Millimeter beträgt und die Kopfwand 2 eine bei Schaltanlagen übliche Festigkeit aufweist. Es können auch andere Längenverhältnisse gewählt werden. Wesentlich ist jedoch, die schnittfreien Stellen 5a und 5b so auszubilden, daß die schnittfreien Stellen 5b bei einem durch einen Störlichtbogen im Inneren des Gehäuses 1 auftretenden Überdruck aufreißen und die schnittfreien Stellen 5a wie ein Scharnier wirken, um das das zugeordnete Feld, zur Freigabe einer Druckentlastungsöffnung ausschwenken kann.

## Patentansprüche

1. Gehäuse einer elektrischen Schaltanlage, mit einer Kopfwand (2), die am gesamten Umfang mit angrenzenden Gehäuseteilen verbunden ist, mit mindestens einem, zur Bildung einer Druckentlastungsöffnung um eine Biegelinie (4) aus der Ebene der Kopfwand (2) ausbiegbaren Feld (3), das ausgehend von der Biegelinie (4) von einer Trennlinie (6) begrenzt ist, die aus von schnittfreien Abschnitten unterbrochenen, die Kopfwand durchtrennenden Einschnitten besteht, wobei die Trennlinie rings um das ausbiegbare Feld (3) verlaufend angeordnet ist, dadurch gekennzeichnet, daß die Biegelinie (4) und der mit den als Sollbruchstellen wirkenden schnittfreien Stellen (5b) versehene Teil der Trennlinie (6) parallel zueinander angeordnet sind, daß die Biegelinie (4) biegefähige schnittfreie Stellen und die Kopfwand durchtrennende Einschnitte aufweist, daß die übrigen Teile der Trennlinie keine schnittfreien Stellen aufweisen und daß der Rand des ausbiegbaren Feldes (3) entlang der Einschnitte (5) um die Dicke der Kopfwand (2) aus der Ebene der Kopfwand (2) ausgestellt ist.

2. Gehäuse nach Anspruch 1, **dadurch gekennzeichnet,** daß in der Biegelinie (4) drei schnittfreie Stellen (5a) und in dem zur Biegelinie (4) parallelen Abschnitt der Trennlinie (6) zwei schnittfreie Stellen (5b) vorgesehen sind.

3. Gehäuse nach Anspruch 1 und 2, **dadurch gekennzeichnet,** daß die Summe der Längen der schnittfreien Stellen (5a) in der Biegelinie (4) etwa fünfmal größer ist als die Summe der Längen der schnittfreien Stellen (5b) in dem zur Biegelinie (4) parallelen Abschnitt der Trennlinie (6).

## Claims

1. Housing for electrical switchgear having an end wall (2) which is connected over its entire circumference to adjacent housing parts, having at least one panel (3) which can be bent out of the plane of the end wall (2) round a bending line (4) for forming a pressure relief aperture, which panel, proceeding from the bending line (4), is limited by a line of separation (6) which consists of cuts interrupted by uncut portions and dividing the end wall, wherein the line of separation is arranged to extend round the panel (3) which can be bent out, characterised in that the bending line (4) and the part of the line of separation (6) which is provided with the uncut locations (5b) acting as breaking points are arranged parallel to each other, in that the bending line (4) has uncut locations capable of bending and cuts dividing the end wall, in that the other parts of the line of separation have no uncut locations, and in that the edge of the panel (3) which can be bent out stands proud of the plane of the end wall (2) by the thickness of the end wall (2) along the cuts (5).

2. Housing according to claim 1, characterised in that three uncut locations (5a) are provided in the bending line (4) and two uncut locations (5b) are provided in the portion of the line of separation (6) which is parallel to the bending line (4).

3. Housing according to claim 1 and 2, characterised in that the sum of the lengths of the uncut locations (5a) in the bending line (4) is approximately five times greater than the sum of the lengths of the uncut locations (5b) in the portion of the line of separation (6) parallel to the bending line (4).

## Revendications

1. Boîtier pour une installation de coupure électrique, comportant une paroi supérieure (2), qui est reliée, sur l'ensemble de sa périphérie, à des éléments contigus du boîtier, et comportant au moins une partie (3) pouvant se redresser, par basculement autour d'une ligne de basculement (4), hors du plan de la paroi supérieure (2) pour former une ouverture de détente de pression, et qui est limitée, à partir de la ligne de basculement ou d'articulation (4), par une ligne de séparation (6), qui est constituée par des entailles qui sont interrompues par des sections non découpées et subdivisent la paroi supérieure, la ligne de séparation s'étendant autour de la partie dégageable (3), caractérisé par le fait que la ligne de basculement (4) et la partie qui comporte les zones (5b) non découpées agissant en tant que points de rupture de consigne, de la ligne de séparation (6) sont parallèles, que la ligne de basculement (4) possède des emplacements flexibles non découpés et des entailles subdivisant la paroi supérieure, que les autres parties de la ligne de séparation ne possèdent aucune zone non découpée et que le bord de la partie basculante (3) est saillante, le long de l'entaille (5), hors du plan de cette paroi supérieure, par rapport à l'épaisseur de la paroi supérieure (2).

2. Boîtier suivant la revendication 1, caractérisé par le fait que trois zones sans découpe (5a) sont prévues dans la ligne de basculement ou d'articulation (4) et que deux zones sans découpe (5b) sont prévues dans la section de la ligne de séparation (6), parallèle à la ligne de basculement ou d'articulation (4).

3. Boîtier selon les revendications 1 et 2, caractérisé par le fait que la somme des longueurs des zones sans découpe (5a) dans la ligne de basculement ou d'articulation (4) est approximativement cinq fois supérieure à la somme des longueurs des zones sans découpe (5b) dans la section de la ligne de séparation (6), parallèle à la ligne de basculement ou d'articulation (4).
